# EUROPEAN PATENT APPLICATION

(11) **EP 1 764 789 A1**
(43) Date of publication of application: **21.03.2007**
(21) Application number: 06006617.2
(22) Date of filing: 29.03.2006
(51) Int. Cl.: G11B 7/125, G11B 7/0055, G11B 7/006

(54) **Apparatus for controlling erasing power level and method using the same**

(30) Priority: 14.09.2005 KR 20050085895
(71) Applicant: Samsung Electronics Co., Ltd., Suwon-si Gyeonggi-do (KR)
(72) Inventor: Yu, Jin Woo, Suwon-Si Gyeonggi-Do (KR); Kay, Hyon Sok, Seoul (KR)
(74) Representative: Grünecker, Kinkeldey, Stockmair & Schwanhäusser Anwaltssozietät

(57) **Abstract**

An apparatus for controlling an erasing power level, which is capable of optimally setting a power level applied to a disc when erasing a test period in an OPC (Optimum Power Control) area of the disc, and a method using the apparatus. The apparatus includes: a pickup unit irradiating light corresponding to the erasing power level to a test period and receiving reflected light; an RF processing unit outputting an indication signal indicating a writing state of the test period according to an output of the pickup unit; and a control unit temporarily setting a plurality of erasing power levels, erasing the test period by applying the plurality of erasing power levels, and then setting any one of the plurality of erasing power levels to an optimum erasing power level on the basis of the indication signal.

## Description

### BACKGROUND OF THE INVENTION

### 1. Field of the Invention

Aspects of the invention relate to an apparatus for controlling an erasing power level and a method using the same, and more particularly to an apparatus for controlling an erasing power level, which is capable of optimally setting a power level applied to a disc when erasing a test period in an OPC (Optimum Power Control) area of the disc, and a method using the same.

### 2. Description of the Related Art

In a high-density disc, such as a Blu-ray disc rewritable (BD-RE), a distance between tracks is very short. Thus, if a writing power level is improper, a cross-talk and a cross-erase can occur when performing a reproducing operation and a recording operation. In consideration of the cross-talk and cross-erase, an OPC (optimum power control) operation has been performed in order to suitably select the writing power level applied to the disc.

The procedure for performing the OPC operation is as follows. To begin with, a test period in an OPC area of the disc is erased to be initialized. Next, a specific writing power pattern is formed in a part of the erased test period. Thus, by checking a state of the writing power pattern, an optimum writing power level is defined. However, since a firstly-used disc does not perform the OPC operation, it is difficult to set a power level for erasing the test period.

On the other hand, a disc manufacturer defines a range of the recommended erasing power level, wherein the recommended erasing power level is applied to the disc when erasing the test period. When erasing the test period according to the recommended erasing power level of the disc manufacturer, it is possible to ensure an adequate test period. However, if a deviation occurs with respect to a laser diode constituting a pickup unit, even though the recommended erasing power level of the disc manufacturer is applied to the disc, the erasing power level can be substantially improper, and thereby the writing power level typically can not be optimally set.

### SUMMARY OF THE INVENTION

Therefore, it is an aspect of the invention to provide an apparatus for controlling an erasing power level which is capable of optimally setting an erasing power level for erasing a test period of a rewritable disc, and a method using the same.

In accordance with the invention, the above and/or other aspects can be achieved by the provision of an apparatus for controlling an erasing power level for erasing a test period arranged in an OPC (optimum power control) area of a rewritable disc, the apparatus including: a pickup unit to irradiate light corresponding to the erasing power level to the test period and to receive reflected light; an RF processing unit to output an indication signal indicating a writing state or an erased state of the test period according to an output of the pickup unit; and a control unit for temporarily setting a plurality of erasing power levels, erasing the test period by applying the plurality of erasing power levels, and then setting any one of the plurality of erasing power levels to an optimum erasing power level on the basis of the indication signal.

In other aspects of the invention, the apparatus can further include a memory to store information in relation to the optimum erasing power level set through the control unit. Also, the control unit can store the information in relation to the optimum erasing power level in the disc through the pickup unit. Further, the control unit can set the recommended erasing power level with respect to the disc to a temporary erasing power level.

In accordance with another aspect of the invention, there is provided a method of controlling an erasing power level for erasing a test period arranged in an OPC area of a rewritable disc, the method including : determining whether information in relation to an optimum erasing power level to erase the test period is pre-stored; temporarily setting a plurality of erasing power levels when the information is pre-stored according the determination result; and setting any one of the plurality of erasing power levels to an optimum erasing power level according to a state of the test period, wherein the test period is firstly erased by applying the plurality of erasing power levels.

In other aspects of the invention, the control unit, when the information in relation to an optimum erasing power level is pre-stored according the determination result, can erase the test period by applying the pre-stored optimum erasing power level. Also, temporarily setting a plurality of erasing power levels can be performed by adding or subtracting a predetermined value to/from the recommended erasing power level. Further, the setting of any one of the plurality of erasing power levels to an optimum erasing power level can further include: erasing the test period by applying the optimum erasing power; determining whether a state of the erased test period is satisfied; and re-setting the optimum erasing power level when the state is not satisfied according to the determination result.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a view showing the configuration of rewritable disc, such as a Blu-ray disc rewritable (BD-RE), as an example of a disc to which aspects of the invention can apply;
FIG. 2A is a view illustrating a test period in an OPC area of the disc of FIG 1;
FIG. 2B is a view illustrating an erasing power level for erasing a test period;
FIG. 2C is a table illustrating recommended erasing power levels of various disc manufacturers;
FIG. 3A is a view illustrating an operation for erasing a test period to which aspects of the invention can be applied;
FIG. 3B is a view illustrating an operation to form a writing power pattern in an erased test period to which aspects of the invention can be applied;
FIG. 4A is a view showing a test period erased using a low erasing power level to which aspects of the invention can be applied;
FIG. 4B is a view showing a test period erased using an adequate erasing power level to which aspects of the invention can be applied;
FIG. 4C is a view showing a test period erased using an excessive erasing power level to which aspects of the invention can be applied;
FIG. 5 is a block diagram showing the configuration of an apparatus for controlling an erasing power level according to an aspect of the invention; and
FIGS. 6A and 6B are flowcharts illustrating a method for controlling an erasing power level according to an aspect of the invention.

### DETAILED DESCRIPTION OF THE EMBODIMENTS

Reference will now be made in detail to the embodiments of the present invention, examples of which are illustrated in the accompanying drawings, wherein like reference numerals refer to the like elements throughout. The embodiments are described below in order to explain the present invention by referring to the figures.

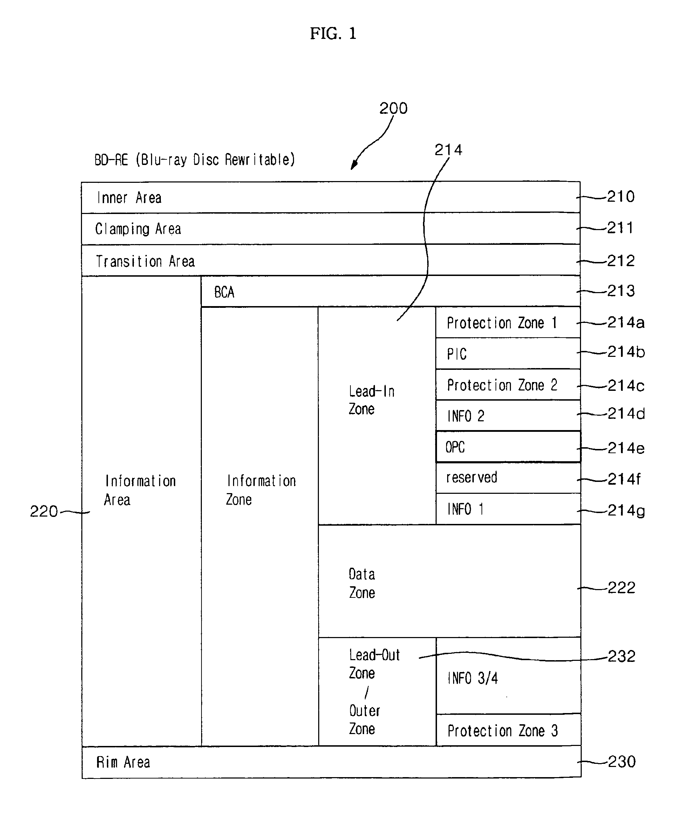

FIG. 1 is a view showing the configuration of a rewritable disc 200, such as a high density optical disc or a Blu-ray disc rewritable (BD-RE). As shown in FIG. 1, the high-density optical disc 200, for example, a Blu-ray disc rewritable (BD-RE), has a track structure which is includes an inner area 210, a center area 220, and a rim area 230, wherein, the inner area 210 of the disc 200 includes a Clamping Area 211, a Transition Area 212, a BCA (Burst Cutting Area) 213 and a Lead-In Zone 214. In addition, the center area 220 and the rim area 230 of the disc 200 include a Data Zone 222 and a Lead-Out Zone 232, respectively.

Continuing with reference to the disc 200 of FIG. 1, the Lead-In Zone 214 is divided and allocated into a first protection zone (Protection Zone 1) 214a, a PIC (Permanent Information and Control data) area 214b, a second protection zone (Protection Zone 2) 214c, a second information area (INFO 2) 214d, an OPC (Optimum Power Control) area 214e, a reserved area 214f and a first information area (INFO 1) 214g. The first protection zone (Protection Zone 1) 214a and the PIC (Permanent Information and Control data) area 214b are pre-recorded areas in which data are pre-recorded, while the remaining areas of the Lead-In Zone 214, the Data Zone 222 and the Lead-Out Zone 232 are rewritable areas in which new data are rewritten.

Also, with respect to the disc 200 of FIG. 1, the BCA (Burst Cutting Area) 213 is an inner most area for being firstly accessed when loading the disc 200, such as a BD-RE disc, in the recording/reproducing apparatus, wherein various disc information such as a disc serial number (DSC), encryption information for disk copy protection, that is, Copy Protection Information (CPI), and the like, are recorded in the BCA 213. The PIC area 214b is an area in which general disc information to be permanently preserved is stored, and wherein a High Frequency Modulated (HFM) groove is recorded in the PIC area 214b. The OPC area 214e is an area arranged in the Lead-In Zone 214, which is used when performing an OPC operation to select an optimum writing power level which can be different according to each manufacturer. An example of a PAA address of the OPC area 214e is 0x1bc00 ~ 0x1dc00.

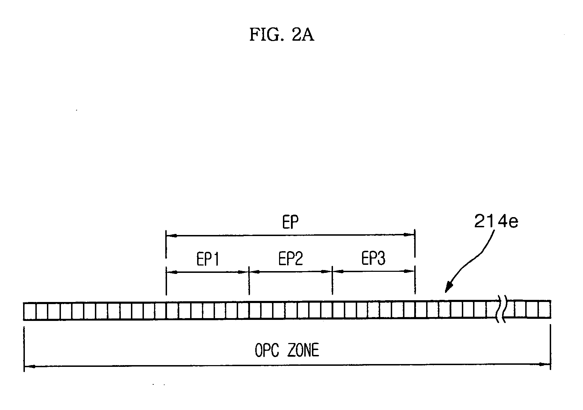

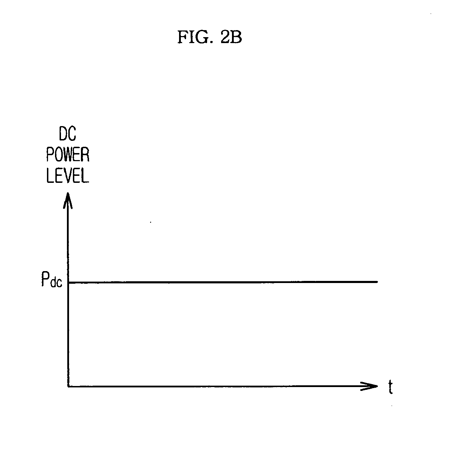

FIG. 2A is a view illustrating a test period in an OPC area 214e of the disc 200 of FIG. 1, and FIG. 2B is a view illustrating an erasing power level for erasing a test period. Referring to FIG. 2A, a part of the OPC area 214e is defined as a test period (EP). The test period (EP) is divided into a first period (EP1), a second period (EP2) and a third period (EP3), wherein the writing power pattern is formed in the second period (EP2). Whether the writing power pattern is pre-recorded in the test period (EP) or not, a process for erasing the whole test period is typically required so as to initialize the test period (EP). This is referred to as initialization of the test period. At this time, the power level for erasing the test period (EP) is referred as an erasing power level. The erasing power level is also referred as a DC power level (Pdc) since it has a fixed power level, such as shown in FIG. 2B.

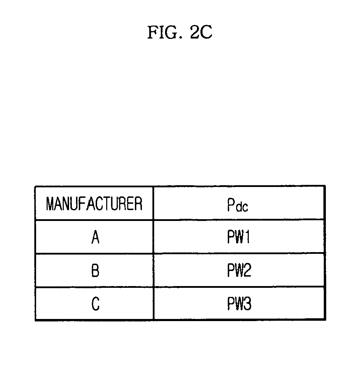

FIG. 2C is a table illustrating recommended erasing power levels of various disc manufacturers A, B and C. In addition, a disc manufacturer typically recommends a range of the adequate erasing power level. As shown in FIG. 2C, the erasing power levels (PW1, PW2 and PW3) recommended, or predetermined, by the various disc manufacturers (A, B and C) can be different. For example, sizes of the erasing power levels can be PW1 < PW2 < PW3.

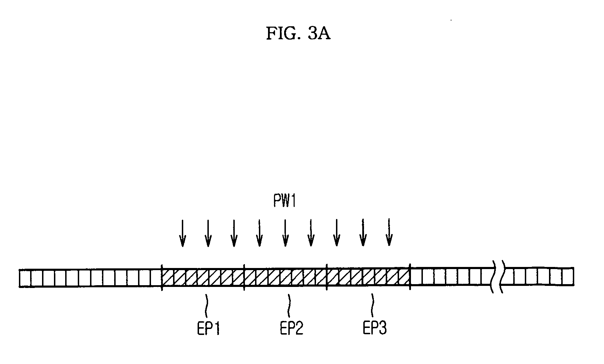

FIG. 3A is a view illustrating an operation for erasing a test period for a disc 200 as can be applied in an aspect of the invention. For example, as shown in FIG. 3A, the initialization of the test period is an operation for erasing the first to third periods (EP1, EP2 and EP3) among the test period (EP) by applying the first erasing power level (PW1).

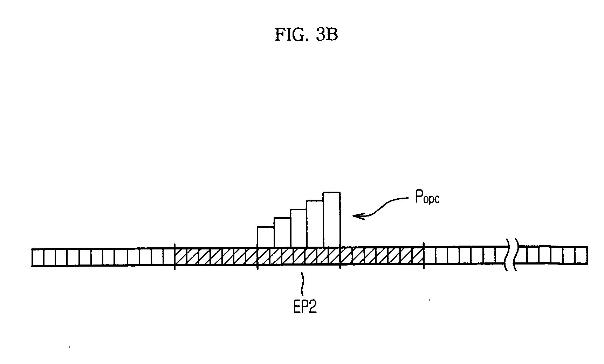

FIG. 3B is a view illustrating an operation for forming a writing power pattern in an erased test period for a disc 200 as can be applied in an aspect of the invention. After the initialization of the test period (EP), a writing power pattern (Popc) is formed in the second period (EP2) of the test period (EP) as shown in FIG. 3B. This writing power pattern (Popc) is formed by varying the writing power level for every specific period. Because the writing power pattern (Popc) is formed in the initialized test period, when the initialization process is improperly performed, it can have a negative effect upon setting the optimum writing power level using the writing power pattern.

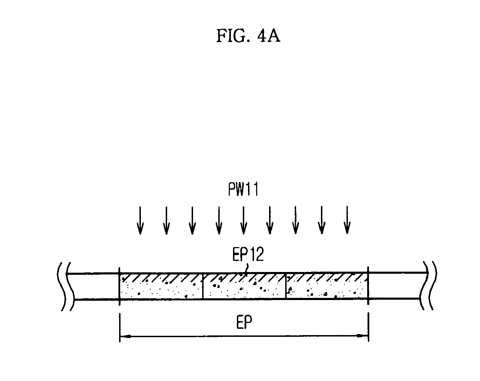

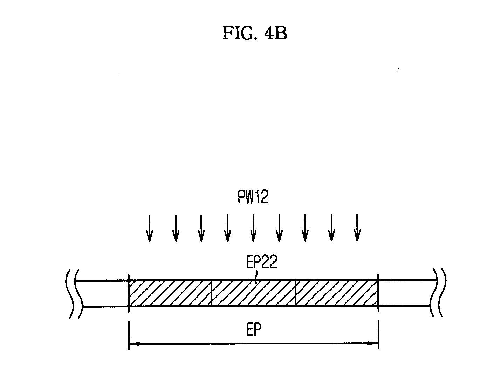

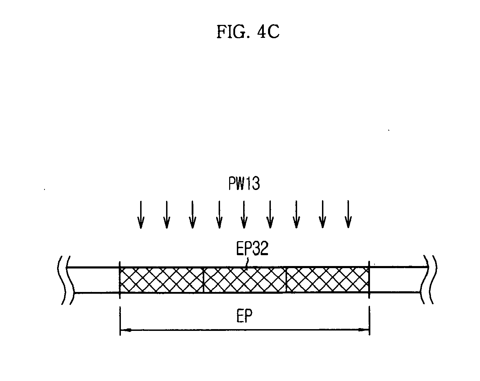

FIG. 4A is a view showing a test period erased using a low erasing power level, FIG. 4B is a view showing a test period erased using an adequate erasing power level, and FIG. 4C is a view showing a test period erased using an excessive erasing power level for a disc 200 as can be applied in aspects of the invention.

For example, as shown in FIG. 4A, in order to erase the test period (EP), when applying an erasing power level (PW11) which is below an adequate level value of the erasing power, the data pre-recorded in the test period (EP) which are not completely erased can remain. In this case, when the writing power pattern is formed in a second period (EP12), it can be difficult to ensure the setting of the optimum writing power level due to the remaining data.

As shown in FIG. 4B, when applying an erasing power level (PW12) which is of an adequate level of the erasing power, the data pre-recorded in the test period (EP22) can be completely erased. In this case, when the writing power pattern is formed in a second period (EP22), it is possible to promote ensuring the setting of the optimum writing power level.

In addition, as shown in FIG. 4C, when applying an excessive erasing power level (PW13) which exceeds the adequate level of the erasing power, the remaining data can be completely erased. However, since the erasing power level is too high, it can cause physical characteristics of the test period to be excessively changed. In this case, when the writing power pattern is formed in a second period (EP23), it can be difficult to ensure the setting of the optimum writing power level due to physical characteristics of which can be excessively changed.

Thus, as shown in FIG. 4B, the disc manufacturers typically recommend use of the adequate erasing power level in consideration of disc characteristics and a disc type. However, the recommended erasing power level of the disc manufacturer does not always coincide in the optimum erasing power level which is suitable to initialize the test period due to a deviation of a laser diode in the pickup unit, etc.

In consideration of the above and/or other aspects of the invention, an apparatus for controlling an erasing power level according to an embodiment of the present invention sets various temporary erasing power levels including the recommended erasing power level of a disc, such as recommended, or predetermined, by the manufacturer of the disc or other predetermined or pre-stored erasing power level for the disc. Next, the apparatus erases the test period according to one or more of the temporary erasing power levels, selects the best, or optimum, erasing power level among the temporary erasing power levels, and sets the erasing power level to the optimum erasing power level. In addition, the apparatus according an embodiment of the present invention stores information in relation to the optimum erasing power level in a storage medium or a disc. Thereafter, the apparatus according to the present invention retrieves the stored information, and applies the retrieved information when erasing the test period.

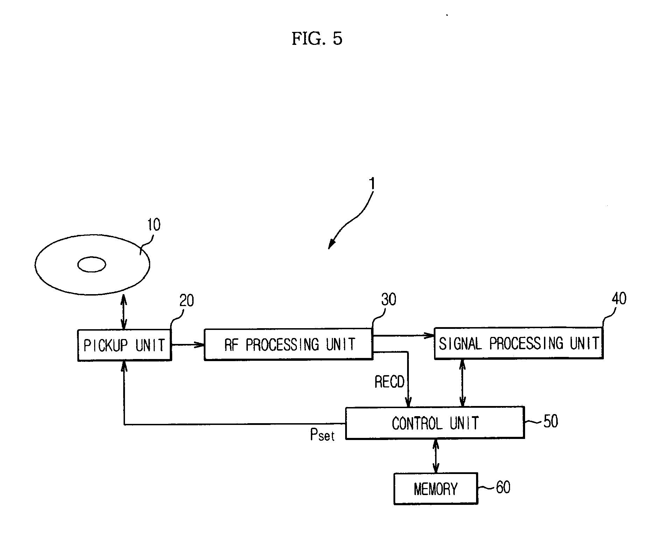

FIG. 5 is a block diagram showing the configuration of an apparatus 1 for controlling an erasing power level according to an embodiment of the present invention. As shown in FIG. 5, the apparatus 1 for controlling an erasing power level according to an embodiment of the present invention includes a pickup unit 20, an RF processing unit 30, a signal processing unit 40, a control unit 50 and a memory 60.

In the apparatus of FIG. 5, the pickup unit 20 reproduces data from a high-density disc 10, such as the disc 200 of FIG.1 or a Blu-ray disc rewritable (BD-RE), and records data on the disc 10. The RF processing unit 30 receives an output signal of the pickup unit 20, sets a waveform of the output signal, and transmits the output signal to the signal processing unit 40. The signal processing unit 40 receives an output signal from the RF processing unit 30, and performs a signal processing operation such as a decoding operation, and the like, under control of the control unit 50, such as a microprocessor or an application specific integrated circuit (ASIC), with associated memory and software or programming, for controlling operation of the apparatus 1 including determining and controlling an erasing power level for erasing a test period for a rewritable disc, such as the disc 10. The memory 60, associated with the control unit 50, serves to store various types of information under control of the control unit 50 for operation of the apparatus 1, including information for determining and controlling an erasing power level for erasing a test period for a rewritable disc, such as the disc 10.

Continuing with reference to FIG. 5, in order to perform the OPC operation, the control unit 50 outputs a power level set signal (Pset) to set the power level to the pickup unit 20. Accordingly, the pickup unit 20 sets a power level of the laser diode of the pickup unit 20 according to a temporary erasing power level, irradiates a laser beam corresponding to the power level into the disc 10, receives a reflected beam from the disc 10, and transmits a signal corresponding to the reflected beam to the RF processing unit 30. The RF processing unit 30 then outputs an RECD signal to the control unit 50, wherein the RECD signal is a signal to indicate to record corresponding data in a specific area of the disc 10. The control unit 50 recognizes a record state of the test period according to a state of the RECD signal (High or Low logical value).

The control unit 50 then performs an operation for erasing the test period by applying the temporary erasing power level or levels, and checks the record state of the test period. In addition, the control unit 50 sets the best, or optimum, erasing power level according to the check result of the record state of the test period. Herein, the best, or optimum, erasing power level is referred to as an erasing power level suitable to the disc 10, such as shown in FIG 4B.

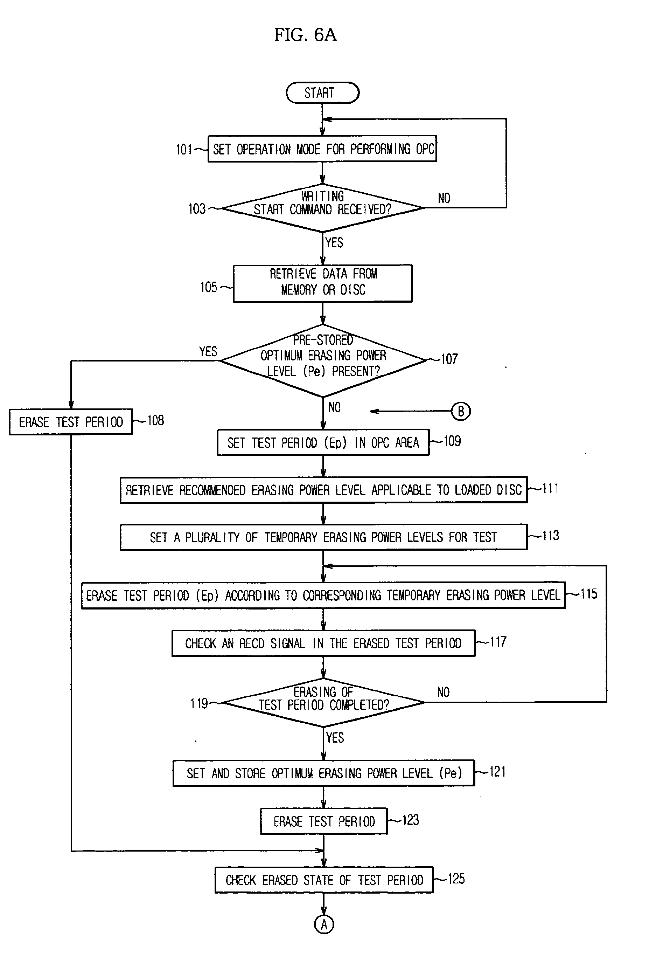

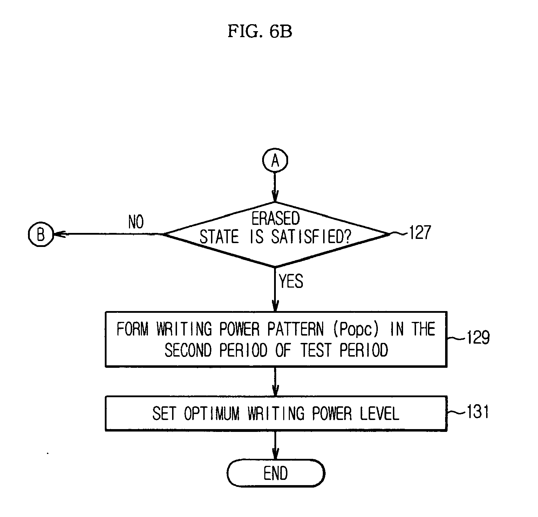

A method of controlling an erasing power level according to an aspect of the present invention will now be explained with reference to FIGS. 6A and 6B, and with reference to FIGS. 1 through 5. FIGS. 6A and 6B are flowcharts illustrating a method of controlling the erasing power level according to an aspect of the present invention.

In Fig. 6A, the control unit 50, to begin, sets an operation mode for performing the OPC (operation 101) when loading the disc 10, such as the disc 200, in the recording/reproducing apparatus 1, and the control unit 50 proceeds with a series of subsequent procedures according to the operation mode. The control unit 50 determines whether a writing start command for performing the OPC is received (operation 103). When the writing start command is received, the control unit 50 retrieves data stored in the memory 60 or the disc 10, or in both (operation 105).

According to the result retrieved in operation 105, the control unit 50 determines whether a pre-stored optimum erasing power level (Pe) exists in the memory 60 or the disc 10 (operation 107). When the pre-stored optimum erasing power level (Pe) does not exist, the control unit 50 sets the test period (EP) in the OPC area 214e as shown in FIG. 2A (operation 109). As illustrated in FIG. 2A, the test period (EP) is divided into the first period (EP1), the second period (EP2) and the third period (EP3). Next, the control unit 50 retrieves a recommended erasing power level (Pdc), such as illustrated in FIGS. 2B and 2C, applicable to the loaded disc 10 through the memory 60 or the disc 10 (operation 111), and sets a plurality of temporary erasing power levels including the retrieved recommended erasing power level (Pdc) (operation 113). The number of the temporary erasing power levels does not need to be defined, and can be set or determined as needed. For example, the temporary erasing power levels can be set to small or large values as a specific value (for example, 0.3 mW to 1 mW) on the basis of the recommended erasing power level. According to an embodiment of the present invention, the number of the temporary erasing power levels can be set in the range of 3 to 6. For example, when the recommended erasing power level is 4 mW, the temporary erasing power level or levels can be set to 3.5 mW, 4 mW, 4.5 mW, or other appropriate value or values for the temporary erasing power level or levels.

In order to erase the test period by applying the preset temporary erasing power level or levels, the control unit 50 transmits a power level set signal (Pset) to the pickup unit 20. Thus, the pickup unit 20 irradiates the laser beam corresponding to the preset temporary erasing power level, and erases the first, second and/or third periods (EP1, EP2 and/or EP3) of the test period (EP) (operation 115). At this time, the RF processing unit 30 provides the RECD signal to the control unit 50, and the control unit 50 checks the RECD signal in the erased test period (operation 117) to determine an erased state of the test period (EP).

Next, the control unit 50 determines whether the operation for erasing the respective test period with respect to the temporary erasing power level or levels is completed (operation 119). According to the determination result as to whether the operation for erasing the respective test period is completed, when the determination result indicates the operation for erasing the test period is not completed, the process returns to operation 115. When the determination result in operation 119 indicates that the operation for erasing the test period is completed, the control unit 50 selects the best, or optimum, erasing power level on the basis of the check result of the RECD signal for the temporary erasing power level or levels, and sets the erasing power level to the optimum erasing power level (Pe) (operation 121). At this time, the control unit 50 stores information in relation to the optimum erasing power level (Pe) in the memory 60 or the disc 10, or in both the memory 60 and the disc 10.

The control unit 50 erases the test period by communicating with the pickup unit 20 to apply the optimum erasing power level (Pe) (operation 123). The control unit 50 then sets or can set a test period different from the above-set test period for controlling an erasing power level for erasing the different test period.

On the other hand, according to the determination result in operation 107, when the pre-stored optimum erasing power level (Pe) is present in the memory 60 or the disc 10, the control unit 50 erases the test period using the pre-stored optimum erasing power level (operation 108).

In addition, when erasing the test period by applying the optimum erasing power level in operation 108 or operation 123, the control unit 50 checks the erased state of the test period according to the RECD signal (operation 125). According to the check result of the erased state of the test period according to the RECD signal, the control unit 50 determines whether the erased state is satisfied (operation 127). If the erased state is not satisfied, the process returns to operation 109 in order to re-set the optimum erasing power level.

According to the determination result of whether the erased state is satisfied in operation 127, when the erased state is satisfied, as shown in FIG. 3B, the control unit 50 forms through the pickup unit 20 the writing power pattern (Popc) in the second period (EP2) of the test period (operation 129). In addition, the control unit 50 checks the record state of the test period, such as the second period (EP2), according to the RECD signal to determine a writing state of the test period, and determines and sets the optimum writing power level, such as by varying the writing power level, or selectively applying one or a plurality of writing power levels to form the writing power pattern (Popc), and then determining, according to the RECD signal, the writing state of the test period corresponding to the applied writing power level, to determine whether the applied writing power level is the optimum writing power level (operation 131), which can then be stored in the memory 60 or in the disc 10.

From the above description, an aspect of the present invention provides an apparatus for controlling an erasing power level, wherein, by setting various temporary erasing power levels, selecting the best, or optimum, erasing power level among the temporary erasing power levels, and setting the erasing power level to the optimum erasing power level, it is possible to set the optimum erasing power level without having a negative influence due to the deviation of the laser diode in the pickup unit, etc., and, in another aspect of the invention, to provide a method of controlling an erasing power level using such apparatus.

In addition, another aspect of the present invention provides an apparatus for controlling an erasing power level, wherein, the apparatus erases the test period by applying the optimum erasing power level for a disc, such as a rewritable disc, suitable to an actual recording/reproducing apparatus, and sets the optimum erasing power level from a writing power pattern formed in the test period, thereby promoting ensuring increased reliability with respect to the writing power level, and a method of controlling an erasing power level using such apparatus.

In addition, further aspects of the present invention provide an apparatus for controlling an erasing power level and a method for controlling an erasing power level using such apparatus, wherein, with respect to a disc, such as a rewritable disc, in which a recording/reproducing apparatus does not perceive a pre-stored or predetermined optimum erasing power level for the disc provided from a disc manufacturer, since such apparatus and method sets the best, or optimum, erasing power level among a plurality of temporary erasing power levels, it is possible to use various discs with the recording/reproducing apparatus.

The foregoing embodiments, aspects and advantages are merely exemplary and are not to be construed as limiting the present invention. Also, the description of the embodiments of the present invention is intended to be illustrative, and not to limit the scope of the claims, and various other alternatives, modifications, and variations will be apparent to those skilled in the art. Therefore, although a few embodiments of the present invention have been shown and described, it would be appreciated by those skilled in the art that changes may be made in the embodiments without departing from the principles and spirit of the invention, the scope of which is defined in the claims and their equivalents.

## Claims

1. An apparatus for controlling an erasing power level for erasing a test period arranged in an OPC (optimum power control) area of a rewritable disc, the apparatus comprising:
a pickup unit to irradiate light corresponding to the erasing power level to the test period and receiving reflected light from the disc;
an RF processing unit to output an indication signal to indicate a writing state or an erased state of the test period according to an output of the pickup unit corresponding to the received reflected light; and
a control unit to temporarily set a plurality of erasing power levels, to erase the test period by applying the plurality of erasing power levels, and then to set one of the plurality of erasing power levels temporarily set as an optimum erasing power level on the basis of the indication signal.

2. The apparatus as set forth in claim 1, further comprising:
a memory to store information in relation to the optimum erasing power level set by the control unit.

3. The apparatus as set forth in claim 1, wherein the control unit stores information in relation to the optimum erasing power level in the rewritable disc or retrieves information in relation to the optimum erasing power level from the rewritable disc.

4. The apparatus as set forth in claim 1, wherein the control unit sets a recommended erasing power level with respect to the rewritable disc to a temporary erasing power level.

5. A method of controlling an erasing power level for erasing a test period arranged in an OPC (optimum power control) area of a rewritable disc, the method comprising:
determining whether information in relation to an optimum erasing power level for erasing the test period of the rewritable disc is pre-stored;
temporarily setting a plurality of erasing power levels when the information in relation to the optimum erasing power level for erasing the test period is determined to be pre-stored; and
setting one of the plurality of erasing power levels temporarily set as the optimum erasing power level according to a state of the test period, wherein the test period is erased by selectively applying the plurality of erasing power levels to determine the optimum erasing power level.

6. The method as set forth in claim 5, wherein, when the information in relation to the optimum erasing power level is determined to be pre-stored, erasing the test period by first applying the pre-stored optimum erasing power level.

7. The method as set forth in claim 5, wherein, the temporarily setting of the plurality of erasing power levels comprises adding or subtracting a predetermined value to/from a predetermined erasing power level.

8. The method as set forth in claim 7, wherein the setting of one of the plurality of erasing power levels as the optimum erasing power level further comprises:
erasing the test period by first setting and applying the predetermined erasing power level as the temporarily set optimum erasing power level;
determining whether an erased state of the test period is satisfied by the application of the temporarily set optimum erasing power level; and
re-setting the optimum erasing power level to another of the plurality of erasing power levels when the erased state of the test period is not satisfied by the applied temporarily set optimum erasing power level.

9. The method as set forth in claim 5, wherein, the temporarily setting of the plurality of erasing power levels comprises adding or subtracting a predetermined value to/from a predetermined erasing power level for the rewritable disc to provide the plurality of erasing power levels, with the predetermined erasing power level being temporarily set as the optimum erasing power level.

10. The method as set forth in claim 9, wherein the setting of one of the plurality of erasing power levels to as an optimum erasing power level further comprises:
erasing the test period by applying the temporarily set optimum erasing power level;
determining whether an erased state of the test period is satisfied by the application of the temporarily set optimum erasing power level;
re-setting the optimum erasing power level to another of the plurality of erasing power levels as the temporarily set optimum erasing power level, when it is determined the erased state of the test period is not satisfied by the applied temporarily set optimum erasing power level; and
setting the temporarily set optimum erasing power level as the optimum erasing power level, when it is determined the erased state of the test period is satisfied by the applied temporarily set optimum erasing power level.

11. The method as set forth in claim 10, further comprising:
storing the temporarily set optimum erasing power level as the optimum erasing power level, when it is determined the erased state of the test period is satisfied by the applied temporarily set optimum erasing power level.

12. The method as set forth in claim 10, further comprising:
setting an optimum writing power level for the test period after the optimum erasing power level is determined for the test period.

13. The method as set forth in claim 10, wherein, when the information in relation to an optimum erasing power level is determined to be pre-stored, erasing the test period by first setting and applying the pre-stored optimum erasing power level as the temporarily set optimum erasing power level.

14. The method as set forth in claim 5, further comprising:
setting an optimum writing power level for the test period after the optimum erasing power level is determined for the test period.

15. The method as set forth in claim 14, wherein the setting of the optimum writing power level for the test period comprises:
applying a writing power level to form a writing power pattern in the test period;
determining the writing state of the test period corresponding to the applied writing power level to determine whether the applied writing power level is the optimum writing power level, and, when it is determined the applied writing power level is not the optimum writing power level, applying another writing power level to form the writing power pattern in the test period;
setting the optimum writing power level for the test period, after the optimum writing power level is determined.

16. The method as set forth in claim 15, wherein the setting of the optimum writing power level for the test period further comprises:
storing the optimum writing power level for the test period, after the optimum writing power level is determined.

17. A method of controlling an erasing power level for erasing a test period of a rewritable disc, the method comprising:
determining whether the erasing power level for erasing a test period of the rewritable disc is pre-stored;
temporarily setting the pre-stored erasing power level as an optimum erasing power level for erasing the test period, otherwise temporarily setting an erasing power level as the optimum erasing power level for erasing the test period;
erasing the test period by applying the temporarily set optimum erasing power level;
determining whether erasing of the test period is satisfied by the application of the temporarily set optimum erasing power level; and
re-setting the optimum erasing power level to another erasing power level as the temporarily set optimum erasing power level, when it is determined the erased state of the test period is not satisfied by the applied temporarily set optimum erasing power level; and
setting the temporarily set optimum erasing power level as the optimum erasing power level, when it is determined the erased state of the test period is satisfied by the applied temporarily set optimum erasing power level.

18. A method for controlling an erasing power level for erasing a test period of a rewritable disc, the method comprising:
temporarily setting an erasing power level as an optimum erasing power level for erasing the test period;
erasing the test period by applying the temporarily set optimum erasing power level;
determining whether erasing of the test period is satisfied by the application of the temporarily set optimum erasing power level;
re-setting the optimum erasing power level to another erasing power level as the temporarily set optimum erasing power level, when it is determined the erased state of the test period is not satisfied by the applied temporarily set optimum erasing power level; and
setting the temporarily set optimum erasing power level as the optimum erasing power level, when the erased state of the test period is satisfied by the applied temporarily set optimum erasing power level.

19. An apparatus for controlling an erasing power level for erasing a test period of a rewritable disc, the apparatus comprising:
a pickup unit to irradiate light corresponding to an erasing power level to the test period and receiving reflected light from the rewritable disc;
an RF processing unit to output an indication signal indicating a writing state or an erased state of the test period according to an output of the pickup unit corresponding to the reflected light; and
a control unit to temporarily set the erasing power level as an optimum erasing power level to erase the test period, to determine whether erasing of the test period is satisfied by the application of the temporarily set optimum erasing power level on the basis of the indication signal from the RF processing unit, to re-set the optimum erasing power level to another erasing power level when the erasing of the test period is not satisfied by the applied temporarily set optimum erasing power level on the basis of the indication signal from the RF processing unit, and to set the temporarily set optimum erasing power level as the optimum erasing power level when the control unit determines the erasing of the test period is satisfied by the application of the temporarily set optimum erasing power level.
